Europäisches Patentamt

European Patent Office

Office européen des brevets

(19)

(11) **EP 0 943 849 A1**

(12) **EUROPÄISCHE PATENTANMELDUNG**

(43) Veröffentlichungstag:
22.09.1999 Patentblatt 1999/38

(51) Int. Cl.⁶: $F16J\ 15/447$, $F01D\ 11/02$

(21) Anmeldenummer: 98810235.6

(22) Anmeldetag: 19.03.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(71) Anmelder: Asea Brown Boveri AG
5401 Baden (CH)

(72) Erfinder: Kirschner, Andreas
8157 Dielsdorf (CH)

(74) Vertreter: Klein, Ernest et al
Asea Brown Boveri AG
Immaterialgüterrecht(TEI)
Haselstrasse 16/699 I
5401 Baden (CH)

(54) **Berührungsfreie Dichtung für Strömungsmaschinen**

(57) Eine berührungsfreie Dichtung zur Reduktion von Leckageströmung in einer Strömungsmaschine ist zwischen dem Deckband (3) einer Schaufel und dem Gehäuse (2) oder dem Rotor angeordnet. Sie weist Dichtstreifen (4, 4') auf, die im Gehäuse (2) bzw. im Rotor eingestemmt sind, die zusammen mit dem Deckband (3) Mischkammern (6, 6') bilden. Leckströmung gelangt durch Eintrittsspalten (8, 8') zwischen Deckband (3) und Dichtstreifen (4, 4') in die Mischkammern (6, 6'). Nach jedem Eintrittsspalt (8, 8') ist eine gekrümmte Vorrichtung (5) angeordnet, welche das Druckgefälle über den Eintrittsspalten (8, 8') reduziert. Die Vorrichtung lenkt die Leckströmung in der Mischkammer (6, 6') auf die Eintrittsspalten (8, 8') zurück, wodurch das lokale Druckfeld in den Spalten (8, 8') erhöht wird. In den Mischkammern (6, 6') wird die Leckströmung durch Reibungsverluste und Verwirbelungen dissipiert. Durch diese erfindungsgemässe Massnahme wird der Leckagemassenstrom beispielsweise um 23% reduziert.

**Figur 1**

## Beschreibung

### Technisches Gebiet

Die Erfindung betrifft eine berührungsfreie Dichtung zur Reduzierung der Leckage in Strömungsmaschinen, wie zum Beispiel Turbinen und Verdichtern, und insbesondere eine Labyrinthdichtung, die zwischen den Deckplatten der Schaufeln und den strömungsbegrenzenden Wandungen der Strömungsmaschine angeordnet ist.
Unter den strömungsbegrenzenden Wandungen sind gehäuseseitig die Wände jener Ringräume zu verstehen, die von den Leitschaufelfüssen und der Gehäusefläche gebildet sind und in welche die Deckplatten der Laufschaufeln eingreifen, und rotorseitig die Wände jener Ringräume, die von den Laufschaufelfüssen und der Rotorfläche gebildet sind und in welche die Deckplatten der Leitschaufeln eingreifen.

### Stand der Technik

Bei axial und radial gas- oder dampfdurchströmten thermischen Maschinen befindet sich zwischen Leitschaufelende und Rotor und zwischen Laufschaufelende und Gehäuse ein Spalt, der zu Verlusten in der Hauptströmung führt und unerwünschte Schwingungen oder Spalterregungen hervorrufen. Diese Spaltverluste können zwar durch das Anbringen von Deckbändern oder Deckplatten und berührungsfreier Dichtungen, beispielsweise Labyrinthdichtungen, verringert werden. Trotz dieser Dichtungen sind die Spaltverluste endlich, da ein Mindestdichtspalt vorhanden sein muss, um Berührungen zwischen Schaufeln und Gehäuse oder Rotor zu vermeiden. Zudem besteht vom Bereich der Hauptströmung zum Bereich innerhalb der Dichtung ein Druckgefälle, welches eine Leckage begünstigt.
Zahlreiche Labyrinthdichtungen sind zum Beispiel aus Trutnovsky und Komotori, Berührungsfreie Dichtungen, VDI-Verlag, bekannt. Spaltverluste werden zum Beispiel durch Erhöhung der Anzahl Widerstände oder Drosseln und den Einbau von Umlenkungen und Vorsprüngen verringert. Hierdurch werden Mischkammern gebildet, in denen der Leckagestrom gemäss dem "foxhole-Prinzip" einen längeren Weg zurückzulegen hat und seine kinetische Energie dabei dissipiert wird. In diesem Sinne ist zum Beispiel in der CH 589 787 eine Labyrinthdichtung offenbart mit einer Umlenkung und mehreren Dichtstreifen zur Reduzierung der Leckage. Sie dienen auch der Verminderung von instabilen Kräften, die zu Spalterregungen und Schwingungen führen könnten. Zwischen den Dichtstreifen, der Gehäusewand und dem Deckband ergeben sich Mischkammern, in denen der Leckagestrom dissipiert wird, einerseits durch Verwirbelungen und anderseits durch Reibungsverluste, die der Leckagestrom auf dem verlängerten Weg entlang der Wände erfährt.

Bei all diesen Dichtungen sind die Leckageverluste, d.h. die Verluste in der Turbinenleistung proportional zum Leckagemassenstrom. Das Ziel dieser Dichtungen ist es also, die Leckageverluste durch Reduzierung des Leckagemassenstroms zu verringern. Dabei sind bei diesen bekannten Dichtungen die Druckverhältnisse und geometrischen Hauptabmessungen der Dichtung und Schaufeln gegeben. D.h. die Druckdifferenz zwischen dem Bereich der Hauptströmung vor der Dichtung und im Bereich der Mischkammer sowie die Spaltbreiten für einen reibungslosen Lauf der Schaufeln sind bei der Ausbildung einer Dichtung vorbestimmt.

### Darstellung der Erfindung

Es ist die Aufgabe der Erfindung, eine berührungsfreie Dichtung zwischen den Laufschaufeln und dem Gehäuse und zwischen den Leitschaufeln und dem Rotor einer Strömungsmaschine zu schaffen, durch welche die Leckagemenge im Vergleich zum Stand der Technik nicht nur durch Verlängerung des Mischungswegs der Leckströmung und Drosselung der Spaltströmung sondern auch durch eine weitere Massnahme vermindert wird. Dabei sollen die geometrischen Abmessungen der Spaltbreiten zwischen den Schaufeln und dem Gehäuse bzw. dem Rotor und die Druckdifferenz zwischen Hauptströmung und Dichtung beibehalten werden. Diese Aufgabe wird erfindungsgemäss durch eine benührungsfreie Dichtung gemäss dem Oberbegriff des Anspruchs 1 gelöst, welche in jeder Mischkammer eine Vorrichtung zur Reduktion des Druckgefälles über dem Eintrittsspalt zur Mischkammer aufweist. Diese Vorrichtung ist insbesondere so ausgebildet, dass sie den Leckagestrom in der Mischkammer umlenkt und er gegen die hereinkommende Strömung im Eintrittsspalt zur Mischkammer richtet.
Eine derartige Umlenkung des Leckagestroms bewirkt lokal im Bereich des Eintrittsspalts zur Mischkammer ein erhöhtes Druckfeld und somit eine reduzierte Druckdifferenz über dem Eintrittsspalt zur Mischkammer. Das verminderte lokale Druckgefälle bewirkt eine Reduzierung der Leckageströmung durch den Einstrittsspalt in die Mischkammer. In der Mischkammer wird die kinetische Energie der Leckströmung durch Verwirbelung und Reibungsverluste an den Wänden der Kammer dissipiert bis die Strömung am Eintrittsspalt zur nächsten Mischkammer wiederum ein Druckgefälle erfährt, das ebenfalls durch eine Umlenkungsvorrichtung und lokale Erhöhung des Druckfeldes im Eintrittsspalt vermindert ist. Somit wird die Strömungsenergie von Kammer zu Kammer stufenweise abgebaut, indem die Strömung an jeder Eintrittsspalte eine Verengung und ein vermindertes Druckgefälle erfährt und in den Mischkammern dissipiert wird.
In einer Ausführung weist die erfindungsgemässe Dichtung mindestens zwei Dichtstreifen auf, durch welche zwischen dem Deckband einer Laufschaufel und dem Gehäuse oder zwischen dem Deckband einer Leitschaufel und dem Rotor mindestens eine Mischkammer gebildet wird. In jeder Mischkammer ist am Deckband eine gekrümmte Vorrichtung angeordnet, deren Innenseite gegen die hereinkommende Strömung gerichtet ist. Die Krümmung beträgt dabei mehr als 180°, sodass die Strömung, die an der Innenseite der Krümmung entlangströmt auf sich selbst zurückgelenkt wird. Diese Umlenkung bewirkt eine Reduktion des Druckgefälles zwischen dem Raum vor einer Mischkammer zu dem innerhalb der Mischkammer.

Zwar ist aus der US 2,910,269 eine berührungsfreie Dichtung beschrieben, die an den Deckbändern der Schaufeln hakenförmige Vorrichtungen und am Gehäuse Ausbuchtungen aufweist, die den Hakenformen ungefähr parallel verlaufen. Diese dienen der Begrenzung der Leckströmung um die Deckbänder. Die Dichtung weist jedoch keine Mischkammer auf und besitzt lediglich die Funktion der Drosselung und Verwirbelung, bewirkt aber keine Veränderung der Druckverhältnisse im Spalt.

Kurze Beschreibung der Zeichnungen

Es zeigen:

Figur 1: Eine erste Ausführung der berührungsfreien Dichtung zwischen einer Laufschaufel und dem Gehäuse einer Strömungsmaschine.
Figur 2: Eine erweiterte Ausführung der Dichtung von Figur 1.
Figur 3: Eine Detailansicht einer gekrümmten Vorrichtung auf dem Deckband einer Laufschaufel.

Weg der Ausführung der Erfindung

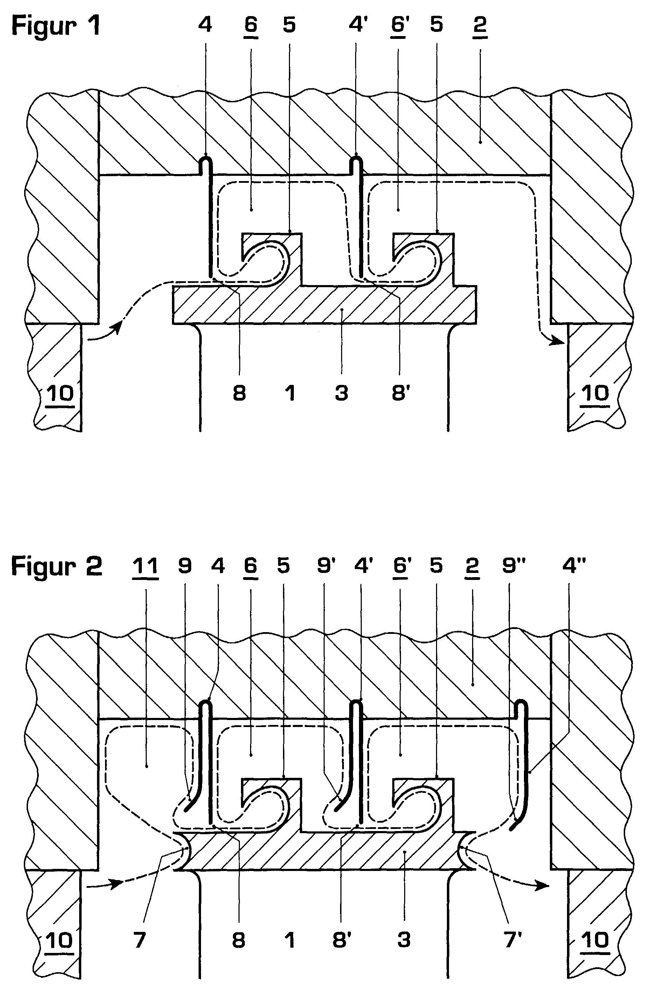

In der Figur 1 ist eine erste Ausführung der erfindungsgemässen berührungsfreien Dichtung am Beispiel einer Laufschaufel 1 gezeigt, die zwischen zwei Leitschaufeln 10 in eine Ausbuchtung im Gehäuse 2 eingreift. Eine Dichtung dieser Art ist auch zur Dichtung des Spaltes zwischen einer Leitschaufel und einem Rotor realisierbar. Auf der Laufschaufel 1 ist als erste Massnahme zur Verminderung von Leckströmungen ein Deckband 3 angeordnet. Im Gehäuse 2 befinden sich Dichtstreifen 4, die in Nuten eingestemmt sind und so weit bis zum Deckband 3 hinunterreichen, dass noch ein schmaler Spalt dazwischen liegt. Zusammen mit dem Deckband 3 bilden die Dichtstreifen Mischkammern 6, 6', wobei zwischen den Dichtstreifen 4, 4' und dem Deckband Eintrittsspalten 8, 8' bleiben, welche einen Spielraum für die Laufschaufel und deren thermische Ausdehnung gewähren. Auf dem Deckband 3 sind zwischen den Dichtstreifen 4, 4' gekrümmte Vorrichtungen 5 angeordnet, wobei die Innenseiten der Krümmungen gegen die Leckströmung gerichtet sind.

Die Leckströmung, die mit strichlierter Linie angedeutet ist, fliesst durch den ersten Eintrittsspalt 8 am Dichtstreifen 4 vorbei und gelangt in den ersten Mischraum 6.

Hier strömt sie zunächst der Innenseite der gekrümmten Vorrichtung 5 entlang Diese ist so geformt und dimensioniert, dass sie nach Verlassen der gekrümmten Vorrichtung 5 auf sich selbst, also auf die Strömung im Eintrittsspalt 8 zurückgelenkt wird. Diese Rücklenkung und Strömung in der Gegenrichtung bewirkt im Bereich des Eintrittsspaltes 8 lokal eine Druckerhöhung. Das Druckgefälle zwischen dem Raum vor dem Dichtstreifen 4 und dem nach dem Dichtstreifen 4 wird durch die Umlenkung reduziert und bewirkt dadurch eine Reduktion des Leckagestroms. Die Leckströmung durchfliesst die Mischkammer 6 weiter entlang dem Dichtstreifen 4, der Gehäusewand und dem nächsten Dichtstreifen 4', wobei die Strömung sich in der Mischkammer auch verwirbelt. Nach Durchströmen der ersten Mischkammer 6 gelangt die Leckströmung durch den Eintrittsspalt 8' in die nächste Mischkammer 6', die sie in gleicher Weise durchfliesst wie die erste Mischkammer 6. In den Mischkammern 6, 6' wird die kinetische Energie der Leckströmung durch Reibungsverluste an den Wandungen der Mischkammern sowie auch durch Wirbelströme dissipiert. Die durch Dissipation geschwächte Leckströmung gelangt schliesslich nach Durchströmen der letzten Mischkammer zurück in die Hauptströmung.

In einer erweiterten Ausführung gemäss Figur 2 weist das Deckband 3 eine Einbuchtung 7 auf, welche einen Teil der Leckströmung in eine Vormischkammer 11 lenkt. Dort fliesst sie an den Wänden entlang, wo sie durch Reibungsverluste dissipiert wird. Die Dichtstreifen 4, 4' sind hier im Gegensatz zur einfachen Ausführung in Figur 1 als Doppelstreifen ausgeführt. Dabei weist die erste Seite der Dichtstreifen 4, 4', welche von der Strömung zuerst berührt wird, also der allgemeinen Richtung der Hauptströmung zugewandt ist, eine Krümmung oder einen Falz 9, 9' auf, welche die Leckströmung vor dem Eintrittsspalt zur nächsten Mischkammer umlenkt, sodass diese auf verlängertem Weg zum Eintrittsspalt gelangt. Die zweite Seite der Dichtstreifen 4, 4', welche der allgemeinen Richtung der Hauptströmung abgewandt ist, ist gerade ausgeführt.

Ein weiterer Dichtstreifen 4" ist zwischen dem Ende des Deckbandes 3 und dem Fuss der Leitschaufel 10 angeordnet. Er ist einfach ausgeführt und weist eine Krümmung oder einen Falz 9" auf, die oder der auf die Laufschaufel 1 gerichtet ist und die spezielle Funktion hat, die Leckströmung auf eine zweite Einbuchtung 7' am Deckband zu lenken. Die Einbuchtung 7' trägt dazu bei, die Leckströmung optimaler in die Hauptströmung zurückzulenken, indem der Winkel zwischen der in die Hauptströmung mündende Leckströmung und der Hauptströmung möglichst klein gehalten wird und die Distanz zwischen der Laufschaufel 1 und der benachbarten Leitschaufel 10 möglichst gross gehalten wird.

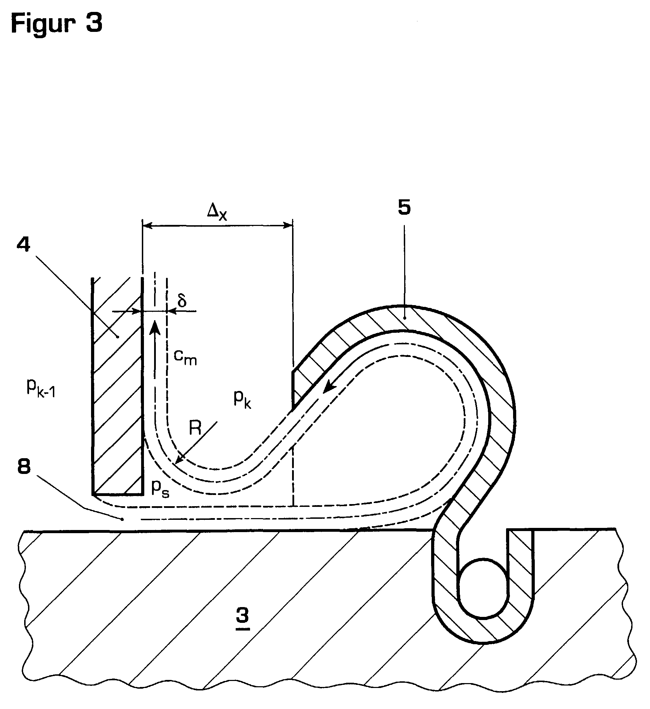

Figur 3 zeigt im Detail eine gekrümmte Vorrichtung 5 und den Verlauf der Leckströmung durch den Eintrittsspalt 8 in die Mischkammer 6 und entlang der Umlenkung. Anhand der Variablen in der Figur 3 kann die potentielle Reduktion des Mengendurchsatzes durch die erfindungsgemässe Dichtung ausgedrückt werden. Auf dem Pfad der Umlenkung mit Krümmungsradius R besitzt der Leckstrom eine Breite $\delta$ . In der Dichtung sind drei verschiedene Drücke bezeichnet, nämlich der Druck $p_{k-1}$ im Bereich vor dem Eintrittsspalt 8, der Druck $p_s$ im Bereich des Eintrittsspalts 8 und der Druck $p_k$ in der Mischkammer 6, wobei $p_{k-1} > p_s > p_k$ gilt. Diese Beziehung gilt auch für alle weiteren Mischkammern. Zur Berechnung der potentiellen Reduktion des Leckagestroms durch die Dichtung wird zum Beispiel für ein gegebenes Teilchen im Leckagestrom das dynamische Gleichgewicht in Funktion des Druckes, der Meridiangeschwindigkeit des Teilchens $c_m$ und des Krümmungsradius R dargestellt. Durch die Anwendung von Bernoulli's Theorem für die Strömung durch den Eintrittsspalt zusammen mit dem dynamischen Gleichgewicht eines Teilchens kann die Strahlgeschwindigkeit $c_m$ wie folgt ausgedrückt werden:

$$c_m = \sqrt{\frac{2(p_{k-1}-p_k)}{\rho(1+2\frac{\delta}{R})}} \, ,$$

wobei $\rho$ die Dichte des Strahlmediums ist. Der reduzierte Mengendurchsatz pro Zeiteinheit

$$\frac{dm_{reduziert}}{dt}$$

durch die Dichtung wird sodann wie folgt ausgedrückt:

$$\frac{dm_{reduziert}}{dt} = \sqrt{\frac{1}{1+2\frac{\delta}{R}}} \cdot \frac{dm_{origianl}}{dt} \, ,$$

wobei

$$\frac{dm_{original}}{dt}$$

der ursprüngliche Mengendurchsatz pro Zeiteinheit ohne Umlenkungsvorrichtung ist.
Ist beispielsweise der Krümmungsradius R des umgelenkten Strahls gleich 3 $\delta$ und der Abstand $\Delta x$ zwischen der gekrümmten Vorrichtung 5 und dem Dichtstreifen 4 gleich 6 $\delta$, dann beträgt der reduzierte Leckstrom noch 77% des ursprünglichen Leckstroms.

Bezugszeichenliste

| 1 | Laufschaufel |
|---|---|
| 2 | Gehäuse |
| 3 | Deckband |
| 4, 4', 4" | Dichtstreifen |
| 5 | gekrümmte Vorrichtung |
| 6, 6' | Mischkammer |
| 7, 7' | Einbuchtung |
| 8, 8' | Eintrittspalt |
| 9, 9', 9" | Krümmung oder Falz |
| 10 | Leitschaufel |
| 11 | Vormischkammer |

**Patentansprüche**

1. Berührungsfreie Dichtung zur Reduzierung von Leckströmung in einer Strömungsmaschine, die in einem Gehäuse (2) einen Rotor und mit Deckbändem (3) versehene Laufschaufeln (1) und Leitschaufeln (10) aufweist, wobei die Dichtung mindestens zwei je am Gehäuse (2) und Rotor angeordnete Dichtstreifen (4, 4') aufweist, die gegenüber den Deckbändern (3) angeordnet sind, wobei sich zwischen den Dichtstreifen (4, 4') und den Deckbändern (3) Eintrittsspalten (8, 8') befinden, und wobei die Dichtstreifen (4, 4') zusammen mit den Deckbändern (3) und dem Gehäuse (2) bzw. dem Rotor Mischkammern (6, 6') bilden, in denen die Leckströmung auf verlängertem Weg verwirbelt und dissipiert wird, dadurch gekennzeichnet, dass
die berührungsfreie Dichtung in jeder seiner Mischkammern (6, 6') eine Vorrichtung zur Reduzierung des Druckgefälles über den Eintrittsspalten (8, 8') aufweist.

2. Berührungsfreie Dichtung nach Anspruch 1, dadurch gekennzeichnet, dass
die Vorrichtung zur Reduzierung des Druckgefälles im Eintrittsspalt (8, 8') eine gekrümmte Vorrichtung (5) aufweist, wobei die Innenseite der Krümmung der Vorrichtung 5 der Leckströmung in den Eintrittsspalten (8, 8') entgegengerichtet ist und sie so dimensioniert ist, dass die Leckströmung auf die Eintrittsspalten (8, 8') zurückgelenkt wird.

3. Berührungsfreie Dichtung nach Anspruch 2, dadurch gekennzeichnet, dass
die Dichtstreifen (4, 4') als einfache und gerade Streifen ausgeführt sind.

4. Berührungsfreie Dichtung nach Anspruch 2, dadurch gekennzeichnet, dass
die Dichtstreifen (4, 4') als doppelte Streifen ausgeführt sind, wovon der erste Streifen, welcher der allgemeinen Strömungsrichtung zugewandt ist, einen Falz oder eine Krümmung (9, 9') aufweist, an dem oder an der die Leckströmung vom Eintrittsspalt (8, 8',) weggelenkt wird, und der zweite Streifen, welcher der allgemeinen Richtung der Hauptströmung abgewandt ist, gerade ausgeführt ist.

5. Berührungsfreie Dichtung nach den Ansprüchen 3 oder 4,
dadurch gekennzeichnet, dass
das Deckband (3) an der Seite, die der Hauptströmung zugewandt ist, eine Einbuchtung (7) aufweist, welche die Leckströmung in eine Vormischkammer (11) lenkt.

6. Berührungsfreie Dichtung nach Anspruch 5,
dadurch gekennzeichnet, dass
die berührungsfreie Dichtung zwischen dem Ende des Deckbandes (3) und dem Fuss der benachbarten Schaufel einen weiteren Dichtstreifen (4") aufweist.

7. Berührungsfreie Dichtung nach Anspruch 6,
dadurch gekennzeichnet, dass
der Dichtstreifen (4") einen Falz oder eine Krümmung (9") aufweist, der oder die zum Deckband (3) gerichtet sind, und das Deckband (3) an seiner der Hauptströmung abgewandten Seite eine weitere Einbuchtung (7') aufweist und die Leckströmung vom Falz oder von der Krümmung (9") auf die Einbuchtung (7') gelenkt wird, von der sie in die Hauptströmung gelenkt wird.

8. Berührungsfreie Dichtung nach Anspruch 6,
dadurch gekennzeichnet, dass
der Dichtstreifen (4") einen Falz oder eine Krümmung aufweist, der oder die in der in Richtung der Hauptströmung gerichtet ist und die Leckströmung in die Haupströmung lenkt.

EP 0 943 849 A1

Figur 1

Figur 2

6

# Figur 3

**Europäisches Patentamt**

## EUROPÄISCHER RECHERCHENBERICHT

**Nummer der Anmeldung**

EP 98 81 0235

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 3 897 169 A (FOWLER JACKSON E) 29. Juli 1975 | 1-3,5 | F16J15/447 F01D11/02 |
| Y | * Spalte 3, Zeile 41 - Spalte 4, Zeile 38; Abbildungen * | 1,4 | |
| Y | GB 285 857 A (BROWN BOVERI) 24. Juni 1929 * Seite 2, Zeile 46 - Zeile 50; Abbildung 9 * | 1,4 | |
| X | US 5 639 095 A (RHODE DAVID L) 17. Juni 1997 * Abbildungen * | 1-8 | |
| X | US 1 756 958 A (WESTINGHOUSE) 6. Mai 1930 * Abbildungen * | 1-3,5 | |
| A | US 4 580 792 A (BARIAUD CHRISTIAN ET AL) 8. April 1986 * Abbildungen * | 1-8 | |

**RECHERCHIERTE SACHGEBIETE (Int.Cl.6)**

F16J
F01D

Der vorliegende Recherchenbericht wurde für alle Patentansprüche erstellt

| Recherchenort | Abschlußdatum der Recherche | Prüfer |
|---|---|---|
| DEN HAAG | 20. August 1998 | Raspo, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)